# EUROPEAN PATENT SPECIFICATION

(11) **EP 1 426 285 B1**
(45) Date of publication and mention of the grant of the patent: **24.08.2011**
(21) Application number: 02425751.1
(22) Date of filing: 06.12.2002
(51) Int. Cl.: B62M 25/08

(54) **Electronically servo-assisted bicycle gearshift and related method**
Elektronisch, servobetätigte Fahrradgangschaltung und zugehöriges Verfahren
Dispositif électronique servocommande de changement de vitesse pour bicyclette et procédé associé

(43) Date of publication of application: 09.06.2004
(73) Proprietor: Campagnolo S.r.l., 36100 Vicenza (VI) (IT)
(72) Inventor: Guderzo, Gianfranco, 36071 Arzignano (Vicenza) (IT); Dal Pra', Giuseppe, 36010 Zané (Vincenza) (IT)
(74) Representative: Riccardi, Elisa

(56) References cited:
- EP-A- 1 103 456
- US-A- 5 213 548
- US-A- 5 357 177
- US-A- 5 865 454

## Description

The present invention concerns an electronically servo-assisted bicycle gearshift and a method for servo-assisting a bicycle gearshift, as well as a program having means for carrying out the method.

An electronically servo-assisted bicycle gearshift generally comprises:
- a rear actuator and a front actuator, having a respective motor, for displacing a chain, through a guide element, in an axial direction with respect to a respective gearshift group comprising at least two sprockets associated with the hub of the rear wheel (the sprockets also being called pinions or toothed wheels and the chain guide element also being called rear derailleur or simply gearshift) of a bicycle and, respectively, with the axis of the pedal cranks (the sprockets also being called crowns or gears or toothed wheels and the guide element also being called front derailleur or simply derailleur), in a first direction (for example from a sprocket with a smaller diameter to a sprocket with a larger diameter, or "upwards gear-shifting") or in a second direction opposite to the first direction (for example, from a sprocket with a larger diameter to a sprocket with a smaller diameter or "downwards gear-shifting"),
- manual input means comprising means for entering a rear or front actuator displacement request signal, respectively, in the first or in the second direction, such as levers associated with the two handlebar grips of the bicycle,
- an electronic control unit connected to the input means, to the rear actuator and to the front actuator, operating, in a normal ride operating mode, to drive the rear actuator or front actuator, respectively, based upon the displacement request signal to displace the chain from a first sprocket to a second adjacent sprocket of the respective gear-shift group, and
- a rear transducer and a front transducer for detecting the position of the actuators (and therefore of the derailleurs) and for indicating it to the electronic control unit, so that the actuators are stopped when the desired position has been reached.

Electronically servo-assisted bicycle gearshifts of the aforementioned type are described, for example, in patents US 5,480,356, US 5,470,277 and US 5 865,454 and in European patent application EP 1 103 456, all of the Applicant; in patent US 6,047,230 of Spencer et al. and in German patent application DE 39 38 454 A1 of Ellsäßer.

In particular, EP 1 103 456 describes such a gearshift wherein the position transducers are of the absolute type, capable of providing an electrical signal indicating the absolute position of the derailleurs, so that after switching them on (again), such transducers take into account the actual position of the derailleurs, which could be slightly displaced due, for example, to vibrations caused by the travel, of the bicycle.

For correct operation of the gearshift in normal ride operating mode (i.e. wherein the gearshift is commanded manually by the rider or automatically or semi-automatically by the electronic control unit), the rear and front actuators must preliminarily be aligned in a start position, used as a reference (together with information on the position of the various sprockets and/or on the distance or pitch between adjacent sprockets) to displace the chain between adjacent sprockets to carry out the gear-shiftings. The start or reference position is usually the one in which the chain is at the sprocket with the smallest diameter.

In prior art mechanically commanded gearshifts, the alignment in the start position is carried out with manual adjustment devices which provide for correcting the position of a steel cable which is used to actuate the displacements during a gear-shifting.

In electronically servo-assisted gearshifts, the electronic control unit, to carry out the displacement of the chain between two adjacent sprockets, drives the actuator referring to logic positions (logic values) representative of the physical positions of the various sprockets.

In these types of gearshift also, the problem of setting the start or reference position arises. This is usually carried out in factory, causing the derailleur, in absence of a control signal of the actuator, to be at the sprocket with the smallest diameter.

U.S. 5,357,177 discloses a method and a gearshift according to the preambles of the independent claims.

In a first aspect thereof, the present invention concerns a method for electronically servo-assisting an electronically servo-assisted bicycle gearshift, comprising the steps of:
a) driving an actuator of a bicycle gearshift to displace a chain of the gearshift in an axial direction with respect to a gearshift group comprising at least two sprockets, in a first direction or in a second direction opposite to the first direction,
b) receiving information on the successful alignment between the chain and a predetermined sprocket of the gearshift group, and
c) setting a biunique correspondence between the physical position of the actuator at step b) and a logic value associated with the gear ratio relative to the predetermined sprocket, characterised in that in step a) the actuator is driven to displace the chain at a lower speed than in a normal ride operating mode.

Advantageously, the predetermined sprocket is the sprocket with the smallest diameter of the gearshift group.

Step c) of setting a biunique correspondence may comprise setting the value of a counter to a logic value pre-associated with the predetermined sprocket.

When the predetermined sprocket is the smallest diameter sprocket of the gearshift group, step c) of setting a biunique correspondence advantageously comprises zeroing the counter.

Alternatively, step c) of setting a biunique correspondence may comprise storing in storage means the current value of a counter as logic value pre-associated with the predetermined sprocket.

Advantageously, steps a) - c) are then repeated for each sprocket and a corresponding logic value.

The method may further comprise the steps of:
d) providing a user interface,
e) receiving through the user interface a first displacement request signal of the actuator in the first direction or a second displacement request signal of the actuator in the second direction,
wherein in step a) of driving the actuator, the displacement of the chain is carried out in the first or in the second direction in accordance with the displacement request signal received in step e).

Step b) of receiving information on the successful alignment may be carried out through the user interface.

Alternatively, the method may comprise the step of:
f) providing means for detecting the relative position between the chain and the predetermined sprocket and providing the information on the successful alignment.

The means for detecting the relative position between the chain and the predetermined sprocket may further by suitable for providing a first displacement request signal of the actuator in the first direction or a second displacement request signal of the actuator in the second direction,
wherein in step a) of driving the actuator, the displacement of the chain is carried out in the first or second direction in accordance with the displacement request signal.

Step a) is preferably carried out with the bicycle still, possibly keeping the chain of the gearshift in motion.

In an embodiment, the method comprises the steps of:
g) receiving an operating mode signal selected from the group comprising at least a normal ride operating mode and a setting operating mode,
h) receiving a first or second, respectively, displacement request signal of the actuator to displace the chain in the axial direction with respect to the gearshift group, in the first direction or second direction, respectively,
i1) when the operating mode signal corresponds to the setting operating mode, carrying out at least steps a)-c),
i2) when the operating mode signal corresponds to the normal ride operating mode, carrying out the step of driving the actuator of the gearshift to displace the chain of the gearshift in the axial direction with respect to the gearshift group, in the first direction or in the second direction, between the physical position corresponding to a first sprocket of the gearshift group and the physical position corresponding to a second sprocket of the gearshift group, the physical positions being determined by the logic values associated with the sprockets.

In particular, step i2) may comprise driving the actuator to displace the chain in the axial direction with respect to the gearshift group, in the first direction or second direction, respectively, by an amount determined increasing or decreasing, respectively, the value of a counter by a differential amount pre-associated with the pair formed by the first sprocket and the second sprocket.

The differential amounts pre-associated with each pair of adjacent sprockets of the gearshift group may be equal to each other.

Advantageously the method further comprises the steps, carried out after step b) of receiving information on the successful alignment of:
j) driving the actuator of the gearshift to displace the chain of the gearshift in the axial direction with respect to the gearshift group, in the first direction or in the second direction, respectively, from the current position sequentially to each adjacent sprocket of the gearshift group,
k) driving the actuator to displace the chain in the axial direction with respect to the gearshift group, in the first direction or in the second direction,
l) receiving second information on the successful alignment between the chain and a predetermined sprocket of the gearshift group.

Moreover, the method may advantageously comprise the step, carried out between step k) and step l), of:
j1) driving the actuator of the gearshift to displace the chain of the gearshift in the axial direction with respect to the gearshift group, in the second direction or in the first direction, respectively, sequentially to each adjacent sprocket of the gearshift group up to the predetermined sprocket.

Preferably, in step a) and/or in step k) where provided for, the actuator is driven to displace the chain at a comparatively low speed, and in steps i2), j) and/or j1) where provided for, the actuator is driven to displace the chain at a comparatively high speed.

Alternatively or additionally, in step a) and/or in step k) where provided for, a stepper motor of the actuator is driven to displace the chain through a movement of one step or of a comparatively low number of steps, and in steps i2), j) and/or j1) where provided for, the motor of the actuator is driven to displace the chain through a movement of a comparatively high number of steps.

In a second aspect thereof, the invention concerns a program for electronically servo-assisting a bicycle gearshift, comprising program code means suitable for carrying out the steps of the method above described when the program is run on a computer.

The program is preferably embodied in at least one microcontroller.

Alternatively, the program can be stored in a computer memory or embodied in a read-only memory.

In a third aspect thereof, the invention concerns a bicycle gearshift, comprising:
- a rear actuator and a front actuator, having a respective motor, to displace through a guide element, a chain in an axial direction with respect to a respective gearshift group comprising at least two sprockets respectively associated with the hub of the rear wheel and with the axle of the pedal cranks of a bicycle, in a first direction or in a second direction opposite to the first direction,
- manual input means comprising means for entering a displacement request signal of the rear actuator or front actuator, respectively, in the first or second direction,
- an electronic control unit connected to the input means, to the rear actuator and to the front actuator, operative, in a normal ride operating mode, to drive the rear or front actuator, respectively, based upon the displacement request signal to displace the chain from a first sprocket to a second adjacent sprocket of the respective gearshift group,
- the manual input means comprising means for selecting the operating mode between said normal ride operating mode and a setting operating mode,
- the electronic control unit, in normal ride operating mode, driving the rear or front actuator, respectively, between a logic value associated with the first sprocket and a logic value associated with the second sprocket,
- the electronic control unit being operative, in the setting operating mode, to drive the rear or front actuator, respectively, based upon the displacement request signal to displace the chain in the first or second direction, the electronic control unit also having means for inputting information on the successful alignment between the chain and a predetermined sprocket of the gearshift group, and means, responsive to the means for inputting information on successful alignment, for setting a biunique correspondence between the physical position of the rear or front actuator, respectively, and the logic value associated with the predetermined sprocket,
characterised in that the electronic control unit is operative to drive the rear or front actuator, respectively, to displace the chain at a lower speed in the setting operating mode than in the normal operating mode.

In an embodiment, the means for setting a biunique correspondence comprise means for setting the value of a rear or front counter to the logic value pre-associated with the predetermined sprocket.

Advantageously the predetermined sprocket is the sprocket with the smallest diameter and the means for setting a biunique correspondence comprise means for zeroing the rear or front counter.

Alternatively, the means for setting a biunique correspondence comprise means for storing in storage means the current value of a rear or front counter as logic value pre-associated with the predetermined sprocket.

Advantageously the gearshift comprises means for detecting the physical position of the rear actuator and front actuator, respectively, and providing it to the electronic control unit, comprising a rear transducer and a front transducer.

In an embodiment, in normal ride operating mode, the electronic control unit drives the rear or front actuator, respectively, to displace the chain between the first sprocket and the second sprocket feedback controlled by the physical position detected by the means for detecting the physical position.

The means for detecting the physical position may further comprise means for detecting the relative position between the rear or front actuator, respectively, and the predetermined sprocket and for generating the information on the successful alignment.

Advantageously, the means for detecting the relative position are also suitable for generating a first displacement request signal of the actuator in the first direction or a second displacement request signal of the actuator in the second direction.

The means for detecting the relative position can, for example, comprise a collimated light source and a collimated light sensor at the actuator and the predetermined sprocket, respectively, or vice-versa. Alternatively, light triangulation can be exploited.

In an embodiment, the gearshift comprises means for storing a differential amount pre-associated with each pair of adjacent sprockets, wherein in normal ride operating mode the logic value associated with the second sprocket is determined by adding, or respectively subtracting the differential amount pre-associated with the pair formed by the first and second sprocket to/from the logic value associated with the first sprocket.

The differential amounts pre-associated with each pair of adjacent sprockets of the gearshift group may be equal to each other.

Preferably the motors of the rear and front actuators are stepper motors and a displacement of the rear or front actuator by one step or by an integer multiple of steps corresponds to a unitary increase or decrease of the rear or front counter.

Alternatively, the motors of the front and rear actuators can be selected from the group consisting of dc motors, brushless motors, asynchronous motors and hydraulic motors.

Advantageously, information output means are also provided defining, with the manual input means, a user interface with the electronic control unit.

The gearshift preferably comprises a power board arranged between the electronic control unit and the rear and front actuators and, where provided for, the front and rear transducers.

Preferably the electronic control unit comprises at least one microcontroller made in C-MOS technology.

Preferably, moreover, the electronic control unit is distributed and comprises many microcontrollers at the display unit and/or at a unit controlling the manual input means and/or at the power board.

Further characteristics and advantages of the present invention shall become clearer from the following detailed description of some preferred embodiments thereof, made with reference to the attached drawings. In the drawings:
- figure 1 schematically illustrates a perspective view of a bicycle equipped with an electronically servo-assisted gearshift according to the present invention,
- figure 2 illustrates a block diagram of the electronically servo-assisted gearshift according to the present invention,
- figures 3 to 5 schematically illustrate different embodiments of storage means of the gearshift according to the present invention,
- figure 6 illustrates a flow chart exemplifying a mode selection of the gearshift according to the invention, and
- figures 7 and 8 jointly illustrate a flow chart of a setting operating mode of the gearshift according to the invention.

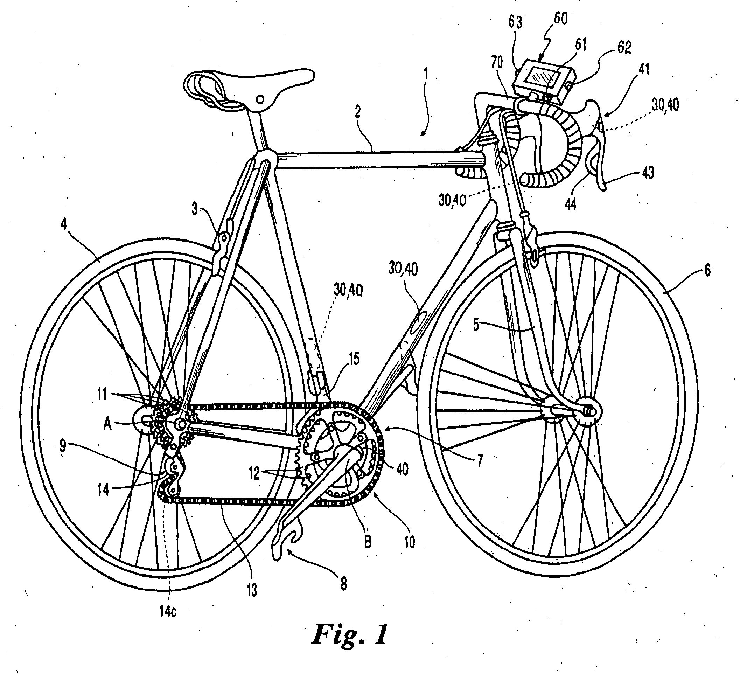

With reference to figure 1, a bicycle 1, in particular a racing bicycle, includes a frame 2 formed in a known way from tubular elements defining a support structure 3 for a rear wheel 4 and a fork 5 for a front wheel 6. A handlebar 70 having a tubular structure is operatively connected to the fork 5.

The frame 2, at its lower portion, supports an axle of the pedals or pedal unit 7, of the conventional type, to actuate the rear wheel 4 through an electronically servo-assisted gearshift according to the invention, generally indicated with reference 8.

The gearshift 8 is substantially formed from a rear gearshift group 9 and a front gearshift group 10. The rear gearshift group 9 includes a plurality of sprockets or pinions 11 (ten in the illustrated example, but which can also be nine, eleven or whatever else in number) having different diameters and coaxial (axis A) with the rear wheel 4. The front gearshift group 10 includes a plurality of sprockets or crowns or gears 12 (two in the illustrated example, but which can also be three or whatever else in number), having different diameters and coaxial (axis B) with the axle of the pedal cranks 7.

The sprockets 11 of the rear gearshift group 9 and the sprockets 12 of the front gearshift group 10 are selectively engageable by a looped transmission chain 13, to provide the different available gear ratios, through the electronically servo-assisted gearshift 8.

The different gear ratios can be obtained by moving a chain guide element or rear derailleur (or also simply gearshift) 14 of the rear gearshift group 9 and/or a chain guide element or front derailleur (or also simply derailleur) 15 of the front gearshift group 10.

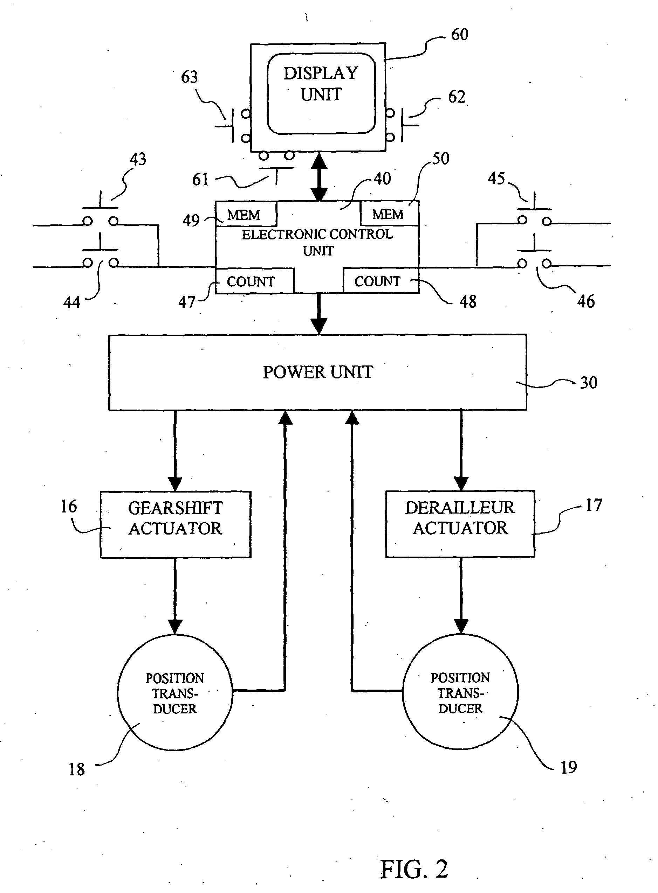

The rear derailleur 14 and the front derailleur 15 are controlled by a respective actuator 16, 17 (Figure 2) typically comprising an articulated parallelogram mechanism and an electric motor with reducer to deform the articulated parallelogram.

A position sensor of the rear derailleur or rear transducer 18 and a position sensor of the front derailleur or front transducer 19 (Figure 2) are associated with the actuators 16, 17.

The details of the construction of the derailleurs 14, 15, of the respective actuators 16, 17 and of the respective position sensors or transducers 18, 19 are not illustrated here since the present invention lies outside their specific construction. For further details refer, for example, to the description of the aforementioned patent applications and patents.

In particular, the transducers 18, 19 are preferably of the type described in EP 1 103 456 A2, suitable for providing an electrical signal indicating the absolute position of the derailleurs 14, 15.

An electronic power board 30, equipped with a battery, provides the electrical power to the motors of' the actuators 16, 17, to the transducers 18, 19, to a microprocessor electronic control unit 40 and preferably to a display unit 60. The battery is preferably of the rechargeable type and the rear derailleur 14 can include, in a per se known way, a dynamo-electric unit for recharging the battery.

In the present description and in the attached claims, under electronic control unit 40 a logic unit shall be meant, which can however be formed from many physical units, in particular from one or more distributed microprocessors which can be held in the display unit 60 and/or in the electronic power board 30 and/or in a command unit.

The electronic power board 30 is, for example, housed in one of the tubes of the handlebar 70, in one of the tubes of the frame 2, for example at a support for a drinking bottle (not illustrated), or in the display unit 60, which is preferably housed centrally on the handlebar 70.

The information transfer between the various components is carried out through electrical cables, advantageously housed inside the tubes of the frame 2, or else in a wireless mode, for example with the Bluetooth protocol.

During travel, the rear and front derailleurs 14, 15 are controlled, through the actuators 16, 17, by the electronic control unit 40 based upon upwards or downwards gear-shifting request signals established by manual command devices, or semi-automatically or automatically by the electronic control unit 40 itself. The manual command devices can, for example, comprise levers 43, 44 associated with the brake lever 41 on a grip of the handlebar 70 for the upwards and downwards gear-shifting signals, respectively, of the rear gearshift group 9, and levers 45, 46 (Figure 2) associated with the brake lever on the other grip of the handlebar 70 for the upwards or downwards gear-shifting signals of the front gearshift group 10 (the levers 45, 46 are not illustrated in Figure 1 for the sake of clarity).

As an alternative to the levers 43, 44 (45, 46) two manually operated buttons, or two buttons which can be operated by a swing lever can be provided.

The electronic control unit 40 is also associated with the two transducers 18, 19 to stop the motors of the actuators 16, 17 when the desired gear ratio has been reached, i.e. when the derailleur 14 or 15 has reached the sprocket 11 or 12 adjacent (with a larger or smaller diameter, respectively) to the one whereat it was when the gear-shifting command (upwards or downwards gear-shifting, respectively) was generated through the manual command device 43,.44, 45, 46 or by the electronic control unit 40.

In an alternative embodiment, the motors of the actuators 16, 17 are stepper motors which are driven by an appropriate number of steps for each upwards or downwards gear-shifting and then automatically stopped, whereas the transducers 18, 19 are used to provide a feedback signal to the electronic control unit 40 so that it can possibly provide to actuate once again the motors of the actuators 16, 17 in the case in which the physical position corresponding to the adjacent sprocket 11 or 12 has not been reached. This can, for example, be due to the fact that the resisting torque offered by the derailleur 14, 15, which is to some degree dependent upon how the rider is pedalling, was too high, greater than the maximum torque which can be delivered by the stepper motors.

More specifically, according to the present invention, the electronic control unit 40 comprises a rear counter 47 and a front counter 48. The counters 47, 48 can, for example, each be realised from a register or a variable stored in a memory cell.

The electronic control unit 40, in the normal ride operating mode of the gearshift 8, drives the actuators 16, 17 and tracks their position increasing or decreasing the counters 47, 48, for example by one unit for every step imposed on the stepper motor and/or based upon the reading of the transducers 18, 19.

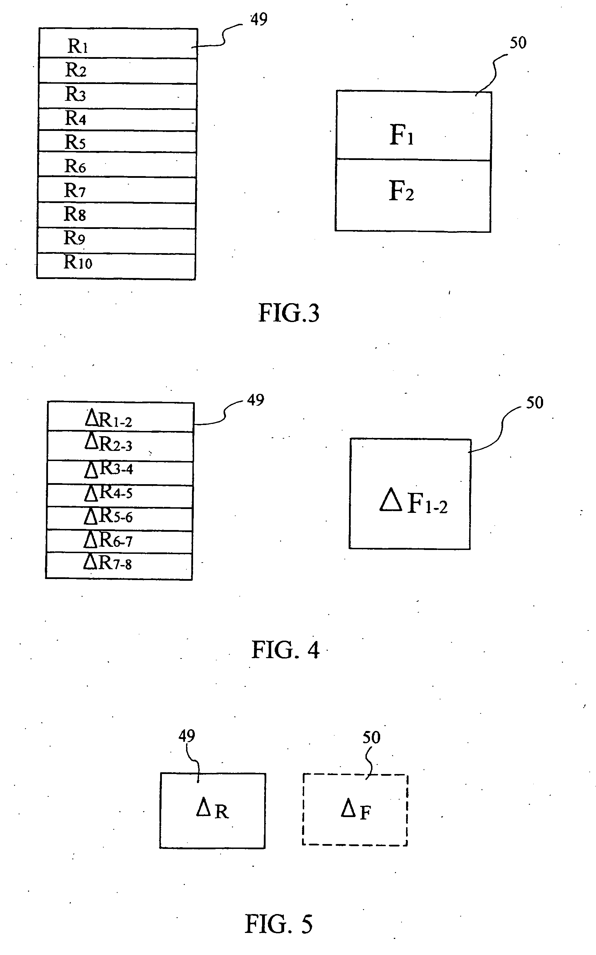

The electronic control unit 40 also comprises rear storage means 49 and front storage means 50, based upon which the electronic control unit 40 determines (in the ways described later on with reference to Figures 3-5) the logic values which the counters 47, 48 must take on so that the derailleurs 14, 15 are at the sprockets 11, 12 desired from time to time.

In other words, if the chain 13 is at a first sprocket 11 (12) and the counter 47 (48) has a first logic value, when the rider actuates the manual upwards gear-shifting request command 43 (45) (or when such a request is generated by the electronic control unit 40 itself), the electronic control unit 40 provides for driving the actuator 16 (17) to displace the chain along axis A (B) in a first direction until the counter 47 (48) reaches the logic value (read directly from the storage means 49 (50) or derived from the information read from the storage means 49 (50)) associated with the adjacent sprocket 11 (12), with immediately larger diameter. The chain 13 is then at the adjacent sprocket 11 (12), with immediately larger diameter. When the rider actuates the manual downwards gear-shifting request command 44 (46) (or when such a request is generated by the electronic control unit 40 itself), the electronic control unit 40 provides for driving the actuator 16 (17) to displace the chain along axis A (B) in the second direction until the counter 47 (48) reaches the logic value (read directly from the storage means 49 (50) or derived from the information read from the storage means 49 (50)) associated with the adjacent sprocket 11 (12), with immediately smaller diameter. The chain 13 is then at the adjacent sprocket 11 (12), with immediately smaller diameter.

In the case in which the actuators 16, 17 comprise stepper motors, advantageously a movement of one step or an integer multiple of steps of the stepper motor, in a first or second direction of rotation, corresponds to each unitary increase or decrease of the counter 47, 48.

In an embodiment (Figure 3), the rear and front storage means 49 and 50 are suitable for directly storing a logic value associated with each sprocket 11, 12 of the respective gearshift group 9, 10. Thus, in the exemplifying case of rear gearshift group 9 comprising ten sprockets or pinions 11, the rear storage means 49 are suitable for storing a logic value R1 associated with the wheel with the smallest diameter, a logic value R2 associated with the second sprocket, logic value R3 associated with the third sprocket, etc., up to a logic value R10 associated with the sprocket with the largest diameter; in the exemplifying case of front gearshift group 10 comprising two sprockets or crowns 12, the front storage means 50 are suitable for storing a logic value F1 associated with the wheel with the smallest diameter and a logic value F2 associated with the sprocket with the largest diameter.

In such an embodiment, the electronic control unit 40 determines the logic values which the counters 47, 48 must assume so that the derailleurs 14, 15 are at the sprockets 11, 12 desired from time to time reading the associated logic value directly from the memory 49, 50.

In an alternative embodiment (Figure 4), the rear storage means 49 are suitable for storing a differential amount associated with each pair of adjacent sprockets 11. Thus, in the exemplifying case of rear gearshift group 9 comprising ten sprockets or pinions 11, the rear storage means 49 are suitable for storing a differential amount ΔR1-2 associated with the pair consisting of the sprocket 11 with the smallest diameter and the second sprocket 11 immediately adjacent to it (with a slightly larger diameter), a differential amount ΔR2-3 associated with the pair consisting of the second and third sprockets, etc., up to a differential amount ΔR9-10 associated with the pair of sprockets 11 having the largest diameters; in the exemplifying case of front gearshift group 10 comprising two sprockets or crowns 12, the front storage means 50 are suitable for storing a single differential amount ΔF1-2.

In such an embodiment, the electronic control unit 40 determines the logic values which the counters 47, 48 must assume so that the derailleurs 14, 15 are. at the sprockets 11, 12 desired from time to time by adding (or subtracting) the differential amount corresponding to the pair consisting of the current sprocket 11, 12 and the sprocket 11, 12 with immediately larger (or smaller) diameter stored in the memory 49, 50 to (or from) the current value of the counter.

When the gearshift groups 9, 10 comprise sprockets 11, 12 equally spaced by a certain pitch, the rear storage means 49 and front storage means 50 (Figure 5) are suitable for storing a single differential amount ΔR and ΔF. If the pitch between adjacent sprockets 11 of the rear gearshift group 9 is equal to the pitch between adjacent sprockets 12 of the front gearshift group 10, there can be present only a single storage means, for example just the front memory 49.

According to the invention, the electronically servo-assisted gearshift, and in particular its electronic control unit 40, is suitable for operating, besides in the normal ride operating mode, in other operating modes, including a programming mode of the microprocessor(s) of the electronic control unit, a diagnostics mode, a "choice-of-operation mode" in which it is possible to choose between manual, automatic or semi-automatic control of the gearshift, for example as described in document US 5,865,454, and a setting mode. The programming, diagnostics and choice-of-operation modes are not described in detail since the present invention lies outside them.

The various operating modes are selected through manual mode selection command means, forming a user interface with the electronic control unit 40, preferably in cooperation with the display unit 60. The manual mode selection command means preferably comprise two buttons 61, 62, arranged at the display unit 60. The user interface can of course comprise other buttons or levers, such as the button 63, at the display unit 60 and/or at the grips of the handlebar 70, used in the other operating modes.

For example, when the rider presses the button 61 arranged centrally under the display unit 60, the electronic control unit 40 can show on the display unit 60 the various operating modes in cyclical sequence and the mode selection means can comprise the same button 61 for accepting the operating mode currently displayed on the display unit 60 and a button, for example the button 62 to the right of the display unit 60, to not accept it and cause the display of the next operating mode.

Alternatively, the electronic control unit 40 can show on the display unit 60 a menu containing all the various operating modes, and the mode selection means can comprise a button for scrolling a selection cursor cyclically in the menu, or two buttons to scroll the selection cursor in the menu in the two directions, as well as a button for accepting the operating mode upon which the selection cursor is currently displayed.

The buttons for accepting and not accepting the operating mode, or the buttons for scrolling the cursor, can also be embodied by the same upwards and downwards gear-shifting request commands 43, 44 or 45, 46, the electronic control unit 40 suitably interpreting the signal generated by the pressing of the buttons according to the context, for example through logic gates or Boolean functions.

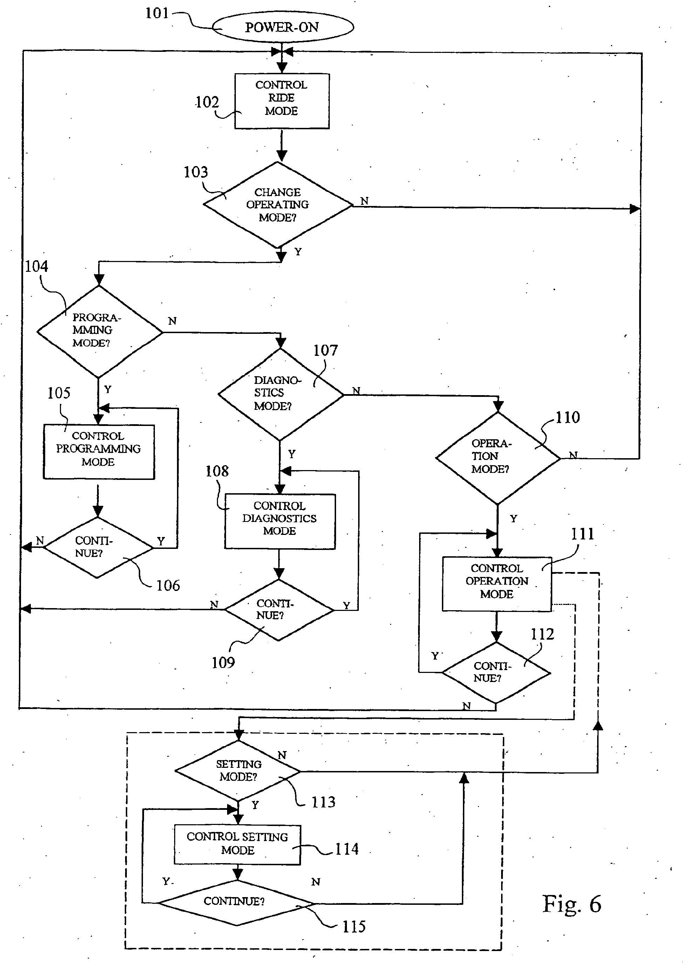

A flow chart exemplifying the mode selection of the gearshift 8 according to the invention is represented in Figure 6.

When switched on 101, the electronic control unit 40 enters into a block 102 for controlling the normal ride operating mode, in particular in manual operation. The system remains in this mode, in which it waits for and controls the signals coming from the gearshifting request commands 43-46 in the way above described, negatively answering to the block 103 querying whether to change the operating mode. In the query block 103 a mode selection request signal, generated by one of the manual input commands, in particular by the pressing of the button 61, is monitored.

In case the mode selection request signal is activated, output Yes from the query block 103, the electronic control unit 40 queries in a block 104 whether one wishes to enter into a programming mode and, in the affirmative case, controls such a mode in a block 105 remaining there until it receives a negative answer to a block 106 requesting whether one wishes to continue, returning to the block 102 for controlling the normal ride operating mode. In the case of a negative answer to the block 104, the electronic control unit 40 queries in a block 107 whether one wishes to enter into a diagnostics mode and, in the affirmative case, controls such a mode in a block 108 remaining there until it receives a negative answer to a block 109 requesting whether one wishes to continue, returning to the block 102 for controlling the normal ride operating mode. In the case of a negative answer to the block 107, the electronic control unit 40 queries in a block 110 whether one wishes to enter into the aforementioned operation selection mode and, in the affirmative case, controls such a mode in a block 111 remaining there until it receives a negative answer to a block 112 requesting whether one wishes to continue, returning to the block 102 for controlling the normal ride operating mode, in particular in manual, semi-automatic or automatic operation as chosen by the rider.

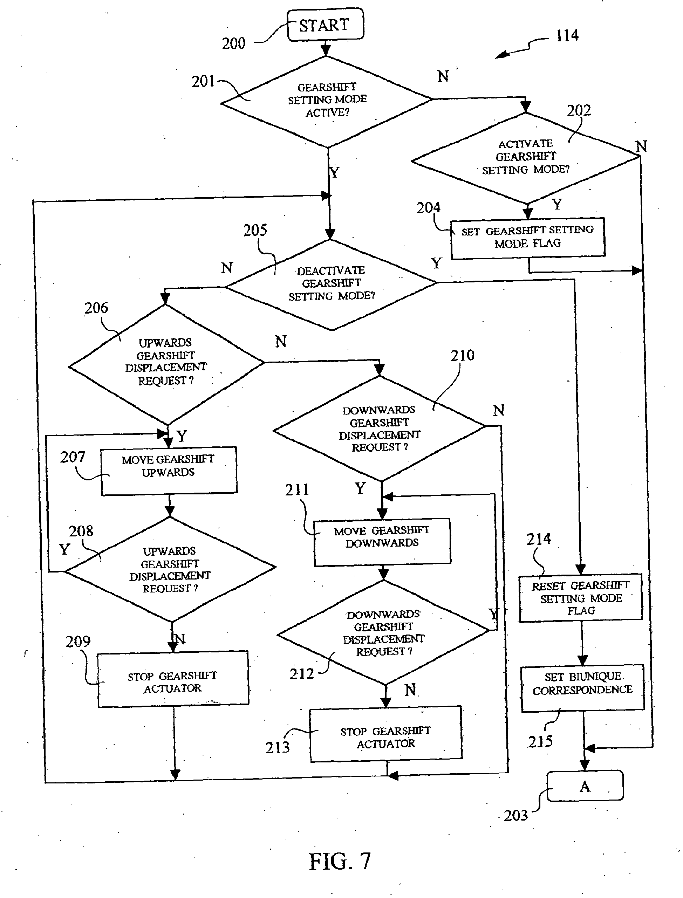

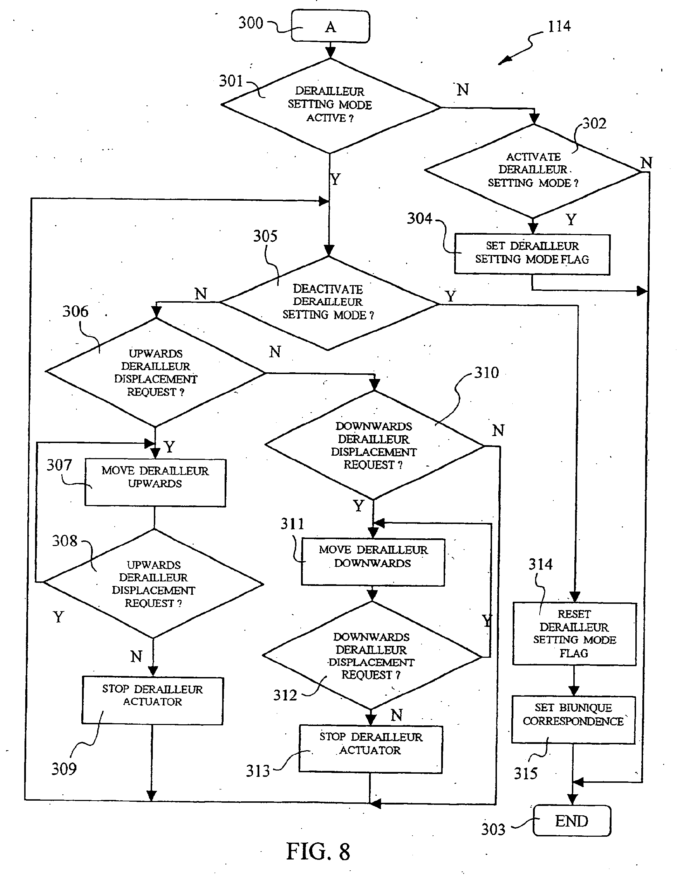

A request 113 whether one wishes to enter into a setting mode is advantageously nested within block 111, so that two confirmations are requested from the user to avoid such a setting mode being selected by mistake. In the case of a negative answer to the block 113, block 111 is returned to, whereas in the case of an affirmative answer the electronic control unit 40 controls a setting operating mode 114, better described hereafter with reference to Figures 7 and 8, remaining there until it receives a negative answer to a block 115 requesting whether one wishes to continue, returning to block 111.

Figures 7 and 8 jointly illustrate a flow chart of the setting operating mode 114. In such figures and in the related description which follows, the rear derailleur 14 is simply indicated with "gearshift", whereas the front derailleur 15 is simply indicated with "derailleur".

Starting from an initial block 200, in a block 201, the electronic control unit 40 checks if it is already in the setting mode of the rear gearshift group 9, referring to a gearshift setting mode flag. In the negative case, in a block 202 it is queried whether one wishes to activate the setting mode of the rear gearshift group 9 and, in the negative case, the setting mode as far as the rear gearshift group 9 is concerned terminates at a block 203. The block 203 corresponds to the start block 300 of the setting mode as far as the front gearshift group 10 is concerned, illustrated in Figure 8 and not described since corresponding, mutatis mutandis, to the setting mode as far as the rear gearshift group 9 is concerned.

In the case of an affirmative answer to block 202, the gearshift setting mode flag is set and the flow proceeds according to blocks 203/300, 301 and 302 (to which shall be given a negative answer since the setting of the rear gearshift group 9 is being carried out), then returning to the initial block 200 (through block 115 of Figure 6).

In block 201 it is checked that the gearshift setting mode is already active, and the electronic control unit 40 queries in a block 205 whether one wishes to deactivate the gearshift setting mode.

In the negative case, the electronic control unit 40 checks in a block 206 whether the upwards gear-shifting request lever 43 has been pressed.

In the affirmative case, the electronic control unit 40 in a block 207 drives the rear actuator 16 so that it moves the chain in the direction towards the larger diameter sprocket(s) and thus continues to drive the rear actuator 16 in this way so long as the upwards gear-shifting request lever 43 remains pressed, as checked in a block 208. The rear actuator 16 is driven so as to displace the rear derailleur 14 by small distances, in any case smaller than the distance between two adjacent sprockets 11. Preferably, to allow more precise adjustment, the rear actuator 16 is driven at a low speed. In particular, in the case in which the rear actuator 16 comprises a stepper motor, this is driven to move by one step at a time or, if one wishes to obtain a faster adjustment, by a certain number of steps at a time.

When the upwards gear-shifting request lever 43 is no longer pressed, the rear actuator 16 is stopped in a block 209 and block 205 is returned to, in which the electronic control unit 40 queries whether one wishes to deactivate the gearshift setting mode.

In the case in which the electronic control unit 40 checks in block 206 that the upwards gear-shifting request lever 43 has not been pressed, it checks in a block 210 whether the downwards gear-shifting request lever 44 has been pressed.

In the affirmative case, the electronic control unit 40 in a block 211 drives the rear actuator 16 (so as to displace the rear derailleur 14 by small distances, in any case smaller than the distance between two adjacent sprockets 11, preferably, at a low speed and by one or more steps at a time in the case of a stepper motor) so that it moves the chain in the direction towards the smaller diameter sprocket(s) and continues to drive the rear actuator 16 in this way so long as the downwards gear-shifting request lever 44 remains pressed, as checked in a block 212.

When the downwards gear-shifting request lever 44 is no longer pressed, the rear actuator 16 is stopped in a block 213 and block 205 is returned to, in which the electronic control unit 40 queries whether one wishes to deactivate the gearshift setting mode.

When in block 205 the electronic control unit 40 receives a positive answer, in a block 214 it cancels the gearshift setting mode flag and, in a block 215, sets a biunique correspondence between the current physical position of the rear actuator 16, as determined by the transducer 18, and the logic value associated with the gear ratio relative to the sprocket 11 upon which the setting mode has been carried out.

In the preferred embodiment in which the electronic control unit 40 comprises the rear counter 47, the setting of the biunique correspondence is accomplished by setting the value of the rear counter 47 to the logic value associated with the sprocket upon which the setting is carried out, read or determined from the storage means 49.

The sprocket 11 upon which the setting mode is carried out is normally the one with the smallest diameter, but it can be provided to choose the sprocket upon which to carry out the setting mode. In such a case, the electronic control unit 40 shall query the user to specify the sprocket 11 upon which the setting mode is carried out or has been carried out, for example before block 204 or before block 215.

Therefore, in the embodiment of the storage means illustrated in Figure 3, the value of the counter 47 shall be set to value R1 or to one of values R1, R2, ... or R10, according to the sprocket 11 chosen for the setting.

In the embodiment of the storage means illustrated in figure 4, the counter 47 shall be zeroed when the sprocket 11 chosen for setting is the one with the smallest diameter. If the sprocket chosen for setting is the i-th wheel of the gearshift group, the value of the counter 47 shall be set to the value determined by the differential amount ΔR(i-1)-i associated with the pair consisting of the sprocket 11 chosen for setting and the sprocket 11 with immediately smaller diameter, added to all the differential amounts associated with any pair of smaller diameter sprockets. In other words, in the case in which the setting is carried out on the second sprocket 11, the value of the counter 47 shall be set to ΔR1-2, in the case in which the setting is carried out on the third sprocket 11, the value of the counter 47 shall be set to ΔR1-2 + ΔR2-3 etc.

In the embodiment of the storage means illustrated in figure 5, the counter 47 shall be zeroed when the sprocket 11 chosen for setting is the one with the smallest diameter. If the sprocket chosen for setting is the i-th wheel of the gearshift group, the value of the counter 47 shall be set to the value determined by the differential amount ΔR multiplied by i-1, in other words by the number indicating the position of the sprocket chosen for setting in the rear gearshift group 9, less one. In other words, in the case in which setting is carried out on the second sprocket 11, the value of the counter 47 shall be set to ΔR, in the case in which setting is carried out on the third sprocket 11, the value of the counter 47 shall be set to ΔR*2, etc.

In an alternative embodiment, the setting of the biunique correspondence can be accomplished by modifying the logic value R1, R2, ... R10, F1, F2 (or, with the appropriate calculations, the values of the differential amounts ΔRx, ΔFy) of the storage means 49 associated with the sprocket on which the setting is carried out, based upon the value of the rear counter 47. Should it be permitted to modify the logic values associated with the sprockets in this way, it shall be appropriate to provide for the possibility of returning to the default logic values (corresponding to nominal or average values), suitably stored in read only storage means.

The setting mode 114 is usually carried out in a workshop with the bicycle mounted on a stand.

A first procedure is that of holding the bicycle still, moving exclusively the actuator 16 up and down and stopping, in other words coming out from the setting operating mode, when one believes to have obtained the optimal alignment "by sight".

The alignment by sight can be improved with different provisions both mechanical and electronic. One can, for example, mount a plate on one of the small idle sprockets of the rear derailleur 14 (and/or on the front derailleur 15), so that there is alignment when it touches the sprocket 11 (12) with the smallest diameter or in any case the one predetermined for setting. Or else, on the small sprocket a laser diode can be mounted and on the sprocket 11 (12) a laser light receiver can be mounted, or vice-versa. To further improve alignment, one could exploit "light triangulation", etc.

A second procedure is that of actuating the chain through the pedal crank unit 7 and verifying the alignment "by ear". An expert user, indeed, can understand that with best alignment there is also minimum noisiness.

Clearly, one can combine the two procedures and stop the alignment using both sight and ear.

It is possible to add a step in which (going in the normal ride operating mode) the gearshift 8 is made to make a complete upwards travel (and/or a complete downwards travel), in the mean time doing a check by sight and/or by ear. At the end of the complete travel(s) (returning to setting mode) the setting is "refined". Such complete travel(s) can be carried out manually by the operator, or else automatically by the electronic control unit 40. Of course, if just one complete travel is carried out, the setting shall then be "refined" on a different sprocket from the one upon which the initial setting was carried out.

It is also possible to carry out an automatic or semi-automatic setting, providing for sensors (not shown) of the relative position between the derailleur 14, 15 and the sprocket 11, 12 chosen for setting. Such relative position sensors can for example comprise a collimated light source and a photodetector respectively associated with the derailleur 14, 15 and with the sprocket 11, 12. When the photodetector detects the light emitted from the collimated light source, it transmits information to the electronic control unit 40 on the successful alignment, corresponding to the positive outcome of block 205 (305) requesting whether one wishes to deactivate the gearshift setting mode. In the case in which the photodetector has a certain extension in the axial direction of the sprocket 11, 12, like for example in the case of a linear CCD sensor, it can also identify, according to the point in which it receives the light coming from the collimated light source, what is the displacement direction necessary for reaching alignment, sending corresponding signals to the electronic control unit 40. Such signals correspond to the positive outcome of blocks 206, 208, 210, 212 (306, 308, 310, 312) of checking whether the upwards or downwards gear-shifting request lever has been pressed.

The displacement of the derailleur 14, 15 in the setting operating mode is preferably carried out at low speed, and in particular through a movement of a certain number of steps in the case of a stepper motor, or more preferably by only one step or by two steps at a time.

In such a way, the setting operating mode 114 shall advantageously be carried out every now and then, in a workshop, dedicating all the necessary time and obtaining a very precise result, i.e. a fine adjustment.

The microprocessor(s) electronic control unit 40 can, for example, be made in C-MOS technology, which has the advantage of having low consumption.

As an alternative to implementation through dedicated hardware, the functionalities of the electronic control unit 40 described above can be accomplished by a software program loadable in a small computer.

In another alternative, the setting operating mode 114 can be realised through an electronic board separated from an electronic control board intended for driving the gearshift in the normal ride operating mode 102 and, possibly, the other operating modes, or through a software program separate from a control program intended to control the gearshift in the normal ride operating mode and, possibly, the other operating modes. In such cases, the setting operating mode 114 can be provided as an update to existing servo-assisted gearshifts.

## Claims

1. Method for electronically servo-assisting an electronically servo-assisted bicycle gearshift (8), comprising the steps of:
a) driving (207, 211, 307, 311) an actuator (16, 17) of a bicycle gearshift (8) to displace a chain (13) of the gearshift in an axial direction (A, B) with respect to a gearshift group (9, 10) comprising at least two sprockets (11, 12), in a first direction or in a second direction opposite to the first direction,
b) receiving information on the successful alignment (205, 305) between the chain (13) and a predetermined sprocket (11, 12) of the gearshift group (9, 10), and
c) setting (215, 315) a biunique correspondence between the physical position of the actuator (16, 17) at step b) and a logic value associated with the gear ratio relative to the predetermined sprocket (11, 12), **characterised in that** in step a) the actuator is driven to displace the chain at a lower speed than in a normal ride operating mode.

2. Method according to claim 1, **characterised in that** the predetermined sprocket (11, 12) is the sprocket with the smallest diameter of the gearshift group (9, 10).

3. Method according to claim 1 or 2, **characterised in that** step c) of setting (215, 315) a biunique correspondence comprises setting the value of a counter (47, 48) to a logic value pre-associated with the predetermined sprocket (11, 12).

4. Method according to claim 3 when dependent upon claim 2, **characterised in that** said step c) of setting (215, 315) a biunique correspondence comprises zeroing the counter (47, 48).

5. Method according to one of claims 1 or 2, **characterised in that** said step c) of setting (215, 315) a biunique correspondence comprises storing in storage means (4.9, 50) the current value of a counter (47, 48) as logic value (Fx, Ry) pre-associated with the predetermined sprocket (11, 12).

6. Method according to claim 5, **characterised by** reapeating steps a) - c) for each sprocket (11, 12) and a corresponding logic value (Fx, Ry).

7. Method according to one of the previous claims, further comprising the steps of:
d) providing a user interface (43-46, 60-63),
e) receiving through the user interface (43-46, 60-63) a first displacement request signal (206, 208, 306, 308) of the actuator (16, 17) in the first direction or a second displacement request signal (210, 212, 310, 312) of the actuator (16, 17) in the second direction,
wherein in step a) of driving the actuator (16, 17), the displacement of the chain (13) is carried out in the first or second direction in accordance with the displacement request signal, (206, 208, 306, 308, 210, 212, 310, 312) received in step e).

8. Method according to claim 7, **characterised in that** step b) of receiving information on the successful alignment (205, 305) is carried out through the user interface (43-46, 60-63).

9. Method according to one of claims 1 to 7, **characterised by** the step of:
f) providing means for detecting the relative position between the chain (13) and the predetermined sprocket (11, 12) and providing the information on the successful alignment (205, 305).

10. Method according to claim 9, **characterised in that** the means for detecting the relative position between the chain (13) and the predetermined sprocket (11, 12) are further suitable for providing a first displacement request signal (206, 208, 306, 308) of the actuator (16, 17) in the first direction or a second displacement request signal (210, 212, 310, 312) of the actuator (16, 17) in the second direction,
wherein in step a) of driving the actuator (16, 17), the displacement of the chain (13) is carried out in the first or second direction in accordance with the displacement request signal (206, 208, 306, 308, 210, 212, 310, 312).

11. Method according to one of the previous claims, **characterised in that** step a) is carried out with the bicycle still.

12. Method according to one of the previous claims, **characterised in that** step a) is carried out keeping the chain (13) of the gearshift in motion.

13. Method according to one of the previous claims, comprising the steps of:
g) receiving an operating mode signal selected from the group comprising at least a normal ride operating mode (102) and a setting operating mode (114),
h) receiving a first (43, 45) or second (44, 46), respectively, displacement request signal of the actuator (16, 17) to displace the chain (13) of the gearshift (8) in the axial direction (A, B) with respect to the gearshift group (9, 10), in the first direction or second direction, respectively,
i1) when the operating mode signal correspond to the setting operating mode (114), carrying out at least steps a)-c),
i2) when the operating mode signal corresponds to the normal ride operating mode (102), carrying out the step of driving the actuator (16, 17) of the gearshift (8) to displace the chain (13) of the gearshift (8) in the axial direction (A, B) with respect to the gearshift group (9, 10), in the first direction or in the second direction, between the physical position corresponding to a first sprocket (11, 12) of the gearshift group (9, 10) and the physical position corresponding to a second sprocket (11, 12) of the gearshift group (9, 10), the physical positions being determined by the logic values associated with the sprockets (11, 12).

14. Method according to claim 13, **characterised in that** step i2) comprises driving the actuator (16, 17) to displace the chain (13) in the axial direction (A, B) with respect to the gearshift group (9, 10), in the first direction or in the second direction, respectively, by an amount determined increasing or decreasing, respectively; the value of a counter (47, 98) by a differential amount (ΔFx, ΔRy) pre-associated with the pair formed by the first sprocket (11, 12) and the second sprocket (11, 12).

15. Method according to claim 14, **characterised in that** the differential amounts (ΔFx, ΔRy) pre-associated with each pair of adjacent sprockets (11, 12) of the gearshift group (9, 10) are equal to each other (ΔF, ΔR).

16. Method according to one of the previous claims, **characterised in that** it also comprises the steps, tarried out after step b) of receiving information on the successful alignment (.215, 315), of:
j) driving the actuator (16, 17) of the gearshift (8) to displace the chain (13) of the gearshift in the axial direction (A, B) with respect to the gearshift group (9, 10), in the first direction or in the second direction, respectively, from the current position sequentially to each adjacent sprocket (11, 12) of the gearshift group (9, 10),
k) driving the actuator (16, 17) to displace the chain (13) in the axial direction (A, B) with respect to the gearshift group (9, 1,9), in the first direction or in the second direction,
l) receiving second information on the successful alignment between the chain (13) and a predetermined sprocket (11, 12) of the gearshift group (9, 10).

17. Method according to claim 16, **characterised in that** it comprises the step, carried out between step k) and step 1), of:
j1) driving the actuator (16, 17) of the gearshift (8) to displace the chain (13) of the gearshift in the axial direction (A, B) with respect to the gearshift group (9, 10), in the second direction or in the first direction, respectively, sequentially to each adjacent sprocket (11, 12) of the gearshift group (9, 10) up to the predetermined sprocket (11, 12).

18. Method according to one of the previous claims, **characterised in that** in step a) and/or in step k) where provided for, the actuator (16, 17) is driven to displace the chain (13) at a comparatively low speed, and in steps i2), j) and/or j1) where provided for, the actuator (16, i7) is driven to displace the chain (13) at a comparatively high speed.

19. Method according to one of the previous claims, **characterised in that** in step a) and/or in step k) where provided for, a stepper motor of the actuator (16, 17) is driven to displace the chain (13) through a movement of one step or of a comparatively low number of steps, and in steps i2), j) and/or j1) where provided for, the motor of the actuator (16, 17) is driven to displace the chain (13) through a movement of a comparatively high number of steps.

20. Program for electronically servo-assisting a bicycle gearshift, comprising program code means suitable for carrying out the steps of the method according to any of the previous claims when the program is run on a computer, embodied in at least one microcontroller.

21. Bicycle gearshift (8), comprising:
- a rear actuator (16) and a front actuator (17), having a respective motor, to displace through a guide element (14, 15) a chain (13) in an axial direction (A, B) with respect to a respective gearshift group (9, 10) comprising at least two sprockets (11, 12) respectively associated with the hub of the rear wheel (4) and with the axle of the pedal cranks (7) of a bicycle (1), in a first direction or in a second direction opposite to the first direction,
- manual input means (43-46, 60-63) comprising means (43-46) for entering a displacement request signal of the rear actuator or front actuator (16, 17), respectively, in the first or second direction,
- an electronic control unit (40) connected to the input means (43-46, 60-63), to the rear actuator (16) and to the front actuator (17), operative, in a normal ride operating mode (102), to drive the rear or front actuator (16, 17), respectively, based upon the displacement request signal to displace the chain (13) from a first sprocket (11,12) to a second adjacent sprocket (11, 12) of the respective gearshift group (9, 10),
- the manual input means (43-46, 60-63) comprising means (60-63) for selecting the operating mode between said normal ride operating mode and a setting operating mode,
- the electronic control unit (40), in normal ride operating mode, driving the rear or front actuator (16, 17), respectively, between a logic value associated with the first sprocket (11, 12) and a logic value associated with the second sprocket (11, 12),
- the electronic control unit (40) being operative, in the setting operating mode, to drive the rear or front actuator (16, 17), respectively, based upon the displacement request signal to displace the chain (13) in the first or second direction, the electronic control unit (40) also having means (43-46) for inputting information on the successful alignment between the chain (13) and a predetermined sprocket (11, 12) of the gearshift group (9, 10), and means (215, 315), responsive to the means (43-46) for inputting information on the successful alignment, for setting a biunique correspondence between the physical position of the rear or front actuator (16, 17), respectively, and the logic value associated with the predetermined sprocket (11, 12),
**characterised in that** the electronic control unit (40) is operative to drive the rear or front actuator (16, 17), respectively, to displace the chain (13) at a lower speed in the setting operating mode than in the normal operating mode,

22. Gearshift (8) according to claim 21, **characterised in that**
- the means (215, 315) for setting a biunique correspondence comprise means (215, 315) for setting the value of a rear or front counter (47, 48) to the logic value pre-associated with the predetermined sprocket (11, 12).

23. Gearshift according to claim 22, **characterised in that** the predetermined sprocket (11, 12) is the sprocket (11, 12) with the smallest diameter and the means (215, 315) for setting a biunique correspondence comprise means for zeroing the rear or front counter (47, 48).

24. Gearshift according to claim 21, **characterised in that**:
- the means for setting a biunique correspondence comprise means for storing in storage means (49, 50) the current value of a rear or front counter (47, 48) as logic value pre-associated with the predetermined sprocket (11, 12),

25. Gearshift according to one of claims 21 to 24, comprising means (18, 19) for detecting the physical position of the rear actuator (16) and front actuator (17), respectively, and providing it to the electronic control unit (40), comprising a rear transducer (18) and a front transducer (19).

26. Gearshift according to claim 25, **characterised in that**, in normal ride operating mode, the electronic control unit (40) drives the rear or front actuator (16, 17), respectively, to displace the chain (13) between the first sprocket (11, 12) and the second sprocket (11, 12) feedback controlled by the physical position detected by the means for detecting the physical position (18, 19).

27. Gearshift according to claim 25 or 26, **characterised in that** the means for detecting the physical position (18, 19) further comprise means for detecting the relative position between the rear or front actuator (16, 17), respectively, and the predetermined sprocket (11, 12) and for generating the information on the successful alignment.

28. Gearshift according to claim 27, **characterised in that** the means for detecting the relative position are also suitable for generating a first displacement request signal of the actuator (16, 17) in the first direction or a second displacement request signal of the actuator (16, 17) in the second direction.

29. Gearshift according to one of claims 21 to 28, comprising means for storing a differential amount (ΔRx, ΔFy) pre-associated with each pair of adjacent sprockets (11, 12), wherein in normal ride operating mode the logic value associated with the second sprocket (11, 12) is determined by adding, or respectively subtracting the differential amount pre-associated with the pair formed by the first and second sprocket (11, 12) to/from the logic value associated with the first sprocket (11, 12).

30. Gearshift according to claim 29, **characterised in that** the differential amounts (ΔR, ΔF) pre-associated with each pair of adjacent sprockets (11, 12) of the gearshift group (9, 10) are equal to each other.

31. Gearshift according to one of claims 22 to 30, **characterised in that** the motors of the rear and front actuators (16, 17) are stepper motors and a displacement of the rear or front actuator (16, 17) by one step or by an integer multiple of steps corresponds to a unitary increase or decrease of the rear or front counter (47, 48),

32. Gearshift according to one of claims 21 to 31, **characterised by** comprising means (60) for outputting information defining, with the manual input means (43-46, 60-63), a user interface with the electronic control unit (40).

33. Gearshift according to one of claims 21 to 32, **characterised in that** it comprises a power board (30) arranged between the electronic control unit (40) and the rear and front actuators (16, 17).

34. Gearshift according to one of claims 21 to 33, **characterised in that** the electronic control unit (40) comprises at least one microcontroller made in C-MOS technology.

35. Gearshift according to one of claims 21 to 34, **characterised in that** the electronic control unit (40) is distributed and comprises many microcontrollers at a display unit (60) and/or at a unit for controlling the manual input means (43-47, 61-63) and/or at a power board (30).

## Patentansprüche

1. Verfahren zur elektronischen Servounterstützung einer elektronisch servounterstützten Fahrradgangschaltung (8), umfassend folgende Schritte:
a) Ansteuern (207, 211, 307, 311) eines Stellgliedes (16, 17) einer Fahrradgangschaltung (8), um eine Kette (13) der Gangschaltung in einer axialen Richtung (A, B) im Bezug auf eine Gangschaltungsgruppe (9, 10), die wenigstens zwei Zahnräder (11, 12) enthält, in einer Richtung oder in einer zweiten Richtung, die der ersten Richtung entgegengesetzt ist, zu versetzen,
b) Empfangen von Informationen über die erfolgreiche Ausrichtung (205, 305) von Kette (13) und einem vorbestimmten Zahnrad (11, 12) der Gangschaltungsgruppe (9, 10) und
c) Einstellen (215, 315) einer eindeutigen Entsprechung zwischen der physikalischen Position des Stellgliedes (16, 17) bei Schritt b) und einem logischen Wert, der dem Schaltverhältnis zugeordnet ist, im Bezug auf das vorbestimmte Zahnrad (11, 12),
**dadurch gekennzeichnet, dass** in Schritt a) das Stellglied angesteuert wird, um die Kette bei einer geringeren Drehzahl als in einer normalen Fahrbetriebsart zu versetzen.

2. Verfahren nach Anspruch 1, **dadurch gekennzeichnet, dass** das vorbestimmte Zahnrad (11, 12) das Zahnrad mit dem geringsten Durchmesser der Gangschaltungsgruppe (9, 10) ist.

3. Verfahren nach Anspruch 1 oder 2, **dadurch gekennzeichnet, dass** Schritt c) des Einstellens (215, 315) einer eindeutigen Entsprechung das Einstellen des Wertes einer Zähleinrichtung (47, 48) auf einen logischen Wert umfasst, der dem vorbestimmten Zahnrad (11, 12) im voraus zugeordnet ist.

4. Verfahren nach Anspruch 3, das bei Abhängigkeit von Anspruch 2 **dadurch gekennzeichnet ist, dass** der Schritt c) des Einstellens (215, 315) einer eindeutigen Entsprechung das Nullen der Zähleinrichtung (47, 48) umfasst.

5. Verfahren nach einem der Ansprüche 1 oder 2, **dadurch gekennzeichnet, dass** der Schritt c) des Einstellens (215, 315) einer eindeutigen Entsprechung das Speichern des momentanen Wertes einer Zähleinrichtung (47, 48) als logischen Wert (Fx, Ry), der dem vorbestimmten Zahnrad (11, 12) im voraus zugeordnet ist, in einer Speichereinrichtung (49, 50) beinhaltet.

6. Verfahren nach Anspruch 5, **gekennzeichnet durch** Wiederholen der Schritte a) bis c) für jedes Zahnrad (11, 12) und einen entsprechenden logischen Wert (Fx, Ry).

7. Verfahren nach einem der vorhergehenden Ansprüche, weiterhin umfassend folgende Schritte;
d) Bereitstellen einer Benutzerschnittstelle (43-46, 60-63) und
e) Empfangen durch die Benutzerschnittstelle (43-46, 60-63) eines ersten Versatzanfordersignals (206, 208, 306, 308) des Stellgliedes (16, 17) in der ersten Richtung oder eines zweiten Versatzanfordersignals (210, 212, 310, 312) des Stellgliedes (16, 17) in der zweiten Richtung,
wobei bei Schritt a) des Ansteuerns des Stellgliedes (16, 17) das Versetzen der Kette (13) in der ersten oder der zweiten Richtung gemäß dem Versatzanfordersignal (206, 208, 306, 308, 210, 212, 310, 312) ausgeführt wird, das bei Schritt e) empfangen wird.

8. Verfahren nach Anspruch 7, **dadurch gekennzeichnet, dass** Schritt b) des Empfangens von Informationen über die erfolgreiche Ausrichtung (205, 305) über die Benutzerschnittstelle (43-46, 60-63) ausgeführt wird.

9. Verfahren nach einem der Ansprüche 1 bis 7, **gekennzeichnet durch** den Schritt:
f) des Bereitstellens einer Einrichtung zum Erfassen der Relativposition zwischen der Kette (13) und dem vorbestimmten Zahnrad (11, 12) und des Bereitstellens der Informationen über die erfolgreiche Ausrichtung (205, 305).

10. Verfahren nach Anspruch 9, **dadurch gekennzeichnet, dass** sich die Einrichtung zum Erfassen der Relativposition zwischen der Kette (13) und dem vorbestimmten Zahnrad (11, 12) weiterhin dazu eignet, ein erstes Versatzanfordersignal (206, 208, 306, 308) des Stellgliedes (16, 17) in der ersten Richtung oder ein zweites Versatzanfordersignal (210, 212, 310, 312) des Stellgliedes (16, 17) in der zweiten Richtung bereitzustellen,
wobei bei Schritt a) des Ansteuerns des Stellgliedes (16, 17) das Versetzen der Kette (13) in der ersten oder der zweiten Richtung in Übereinstimmung mit dem Versatzanfordersignal (206, 208, 306, 308, 210, 212, 310, 312) ausgeführt wird.

11. Verfahren nach einem der vorhergehenden Ansprüche, **dadurch gekennzeichnet, dass** Schritt a) bei Stillstand des Fahrrades ausgeführt wird.

12. Verfahren nach einem der vorhergehenden Ansprüche, **dadurch gekennzeichnet, dass** Schritt a) ausgeführt wird, während die Kette (13) der Gangschaltung in Bewegung gehalten wird.

13. Verfahren nach einem der vorhergehenden Ansprüche, umfassend folgende Schritte:
g) Empfangen eines Betriebsartsignals, das aus der Gruppe gewählt ist, die wenigstens aus einer Normalfahrbetriebsart (102) und einer Einstellbetriebsart (114) besteht,
h) Empfangen eines ersten (43, 45) bzw. eines zweiten (44, 46) Versatzanfordersignals des Stellgliedes (16, 17), um die Kette (13) der Gangschaltung (8) in der Achsrichtung (A, B) im Bezug auf die Gangschaltungsgruppe (9, 10) in der ersten Richtung bzw, der zweiten Richtung zu versetzen,
i1) wenn das Betriebsartsignal der Einstellbetriebsart (114) entspricht, Ausführen wenigstens der Schritte a) bis c),
i2) wenn das Betriebsartsignal der normalen Fahrbetriebsart (102) entspricht, Ausführen des Schrittes des Ansteuerns des Stellgliedes (16, 17) der Gangschaltung (8), um die Kette (13) der Gangschaltung (8) in der axialen Richtung (A, B) im Bezug auf die Gang schaltungsgruppe (9, 10) in der ersten Richtung oder der zweiten Richtung zwischen der physikalischen Position, die einem ersten Zahnrad (11, 12) der Gangschaltungsgruppe (9, 10) entspricht, und der physikalischen Position, die einem zweiten Zahnrad (11, 12) der Gangschaltungsgruppe (9, 10) entspricht, zu versetzen, wobei die physikalischen Positionen durch logische Werte bestimmt sind, die den Zahnrädern (11, 12) zugeordnet sind.

14. Verfahren nach Anspruch 13, **dadurch gekennzeichnet, dass** der Schritt i2) das Ansteuern des Stellgliedes (16, 17) umfasst, um die Kette (13) in der axialen Richtung (A, B) im Bezug auf die Gangschaltungsgruppe (9, 10) in der ersten Richtung bzw. in der zweiten Richtung um einen Umfang zu versetzen, der durch Erhöhen bzw. Verringern des Wertes einer Zähleinrichtung (47, 48) um eine Differentialgröße (ΔFx, ΔRy) bestimmt wird, die dem Paar zugeordnet ist, das durch das erste Zahnrad (11, 12) und das zweite Zahnrad (11, 12) gebildet ist.

15. Verfahren nach Anspruch 14, **dadurch gekennzeichnet, dass** die Differentialgrößen (ΔFx, ΔRy), die jedem Paar benachbarter Zahnräder (11, 12) der Gangschaltungsgruppe (9, 10) im voraus zugeordnet sind, einander gleichen (ΔF, ΔR).

16. Verfahren nach einem der vorhergehenden Ansprüche, **dadurch gekennzeichnet, dass** es zudem die Schritte enthält, die nach Schritt b) des Empfangens von Informationen über die erfolgreiche Ausrichtung (215, 315) ausgeführt werden, wie:
j) Ansteuern des Stellgliedes (16, 17) der Gangschaltung (8), um die Kette (13) der Gangschaltung in der axialen Richtung (A, B) im Bezug auf die Gangschaltungsgruppe (9, 10) in der ersten Richtung bzw. in der zweiten Richtung aus der momentanen Stellung nacheinander auf jedes benachbarte Zahnrad (11, 12) der Gangschaltungsgruppe (9, 10) zu versetzen,
k) Ansteuern des Stellgliedes (16, 17), um die Kette (13) in der axialen Richtung (A, B) im Bezug auf die Gangschaltungsgruppe (9, 10) in der ersten Richtung oder der zweiten Richtung zu versetzen,
I) Empfangen von zweiten Informationen über die erfolgreiche Ausrichtung von Kette (13) und einem vorbestimmten Zahnrad (11, 12) der Gangschaltungsgruppe (9, 10).

17. Verfahren nach Anspruch 16, **dadurch gekennzeichnet, dass** es folgenden Schritt, der zwischen Schritt k) und Schritt I) ausgeführt wird, enthält:
j1) Ansteuern des Stellgliedes (16, 17) der Gangschaltung (8), um die Kette (13) der Gangschaltung in der axialen Richtung (A, B) im Bezug auf die Gangschaltungsgruppe (9, 10) in der zweiten Richtung bzw. der ersten Richtung nacheinander auf jedes benachbarte Zahnrad (11, 12) der Gangschaltungsgruppe (9, 10) bis zu dem vorbestimmten Zahnrad (11, 12) zu versetzen.

18. Verfahren nach einem der vorhergehenden Ansprüche, **dadurch gekennzeichnet, dass** bei Schritt a) und/oder Schritt k), sofern vorgesehen, das Stellglied (16, 17) angesteuert wird, um die Kette (13) bei einer vergleichsweise geringen Drehzahl zu versetzen, und bei den Schritten i2), j) und/oder j1), soweit vorgesehen, das Stellglied (16, 17) angesteuert wird, um die Kette (13) bei einer vergleichsweise hohen Drehzahl zu versetzen.

19. Verfahren nach einem der vorhergehenden Ansprüche, **dadurch gekennzeichnet, dass** in Schritt a) und/oder Schritt k), sowei vorgesehen, ein Schrittmotor des Stellgliedes (16, 17) angesteuert wird, um die Kette (13) durch eine Bewegung eines Schrittes oder einer vergleichseweise geringen Zahl von Schritten zu versetzen, und in den Schritten i2), j) und/oder j1), soweit vorgesehen, der Motor des Stellgliedes (16, 17) angesteuert wird, um die Kette (13) durch eine Bewegung einer vergleichsweise hohen Zahl von Schritten zu versetzen.

20. Programm zur elektronischen Servounterstützung einer Fahrradgangschaltung, enthaltend einen Programmcode, der sich dazu eignet, die Schritte des Verfahrens gemäß einem der vorherigen Ansprüche auszuführen, wenn das Programm auf einem Computer läuft, der in wenigstens einem Mikrocontroller enthalten ist.

21. Fahhraggangschaltung (8), enthaltend:
- ein hinteres Stellglied (16) und ein vorderes Stellglied (17), die über einen entsprechenden Motor verfügen, um durch ein Führungselement (14, 15) eine Kette (13) in einer axialen Richtung (A, B) im Bezug auf eine entsprechende Gangschaltungsgruppe (9, 10), die wenigstens zwei Zahnräder (11, 12) enthält, die der Nabe des Hinterrades (4) bzw. der Achse der Pedalkurbeln (7) des Fahrrades (1) zugeordnet sind, in einer ersten Richtung oder in einer zweiten Richtung, die der ersten Richtung entgegengesetzt ist, zu versetzen,
- eine manuelle Eingabeeinrichtung (43-46, 60-63), enthaltend eine Einrichtung (43-46) zum Eingeben eines Versatzanfordersignals des hinteren Stellgliedes bzw. des vorderen Stellgliedes (16, 17) in der ersten oder der zweiten Richtung,
- eine elektronische Steuereinheit (40), die mit der Eingabeeinrichtung (43-46, 60-63), dem hinteren Stellglied (16) und dem vorderen Stellglied (17) verbunden ist und in Funktion in einer normalen Fahrbetriebsart (102) das hintere bzw. das vordere Stellglied (16, 17) auf der Basis des Versatzanfordersignals ansteuert, um die Kette (13) von einem ersten Zahnrad (11, 12) auf ein zweites benachbartes Zahnrad (11, 12) der entsprechenden Gangschaltungsgruppe (9, 10) zu versetzen,
- wobei die manuelle Eingabeeinrichtung (43-46, 60-63) eine Einrichtung (60-63) zum Wählen der Betriebsart zwischen der normalen Fahrbetriebsart und einer Einstellbatriebsart enthält,
- die elektronische Steuereinheit (40) in der normalen Fahrbetriebsart das hintere bzw. vordere Stellglied (16, 17) zwischen einem logischen Wert, der dem ersten Zahnrad (11, 12) zugeordnet ist, und einem logischen Wert ansteuert, der dem zweiten Zahnrad (11, 12) zugeordnet ist,
- die elektronische Steuereinheit (40) in der Einstellbetriebsart betätigt werden kann, um das hintere bzw. das vordere Stellglied (16, 17) auf der Basis des Versatzanfordersignals anzusteuern, um die Kette (13) in der ersten oder der zweiten Richtung zu versetzen, wobei die elektronische Steuereinheit (40) zudem Einrichtung (43-46) zum Eingeben von Informationen über die erfolgreiche Ausrichtung von Kette (13) und einem vorbestimmten Zahnrad (11, 12) der Gangschaktungsgruppe und eine Einrichtung (215, 315) enthält, die auf die Einrichtung (42-46) zum Eingeben von Informationen über die erfolgreiche Ausrichtung reagiert, um eine eindeutige Entsprechung zwischen der physikalischen Position des hinteren bzw. vorderen Stellgliedes (16, 17) und den logischen Wert einzustellen, der dem vorbestimmten Zahnrad (11, 12) zugeordnet ist,
**dadurch gekennzeichnet, dass** die elektronische Steuereinheit (40) in Funktion das hintere bzw. das vordere Stellglied (16, 17) ansteuert, um die Kette (13) bei einer geringeren Drehzahl in der Einstellbetriebsart als in der normalen Fahrbetriebsart zu versetzen.

22. Gangschaltung (8) nach Anspruch 21, **dadurch gekennzeichnet, dass**
- die Einrichtung (215, 315) zum Einstellen einer eindeutigen Entsprechung eine Einrichtung (215, 315) zum Einstellen des Wertes der hinteren oder vorderen Zähleinrichtung (47, 48) auf den logischen Wert enthält, der dem vorbestimmten Zahnrad (11, 12) im voraus zugeordnet ist.

23. Gangschaltung nach Anspruch 22, **dadurch gekennzeichnet, dass** das vorbestimmte Zahnrad (11, 12) das Zahnrad (11, 12) mit dem kleinstens Durchmesser ist und die Einrichtung (215, 315) zum Einstellen der eindeutigen Entsprechung eine Einrichtung zur Nullung der hinteren oder vorderen Zähleinrichtung (47, 48) enthält.

24. Gangschaltung nach Anspruch 21, **dadurch gekennzeichnet, dass**:
- die Einrichtung zum Einstellen einer eindeutigen Entsprechung eine Einrichtung zum Speichern des momentanen Wertes der hinteren oder vorderen Zähleinrichtung (47, 48) als logischen Wert, der dem vorbestimmten Zahnrad (11, 12) zugeordnet ist, in einer Speichereinrichtung (49, 50) enthält.

25. Gangschaltung nach einem der Ansprüche 21 bis 24, enthaltend eine Einrichtung (18, 19) zum Erfassen der physikalischen Position des hinteren Stellgliedes (16) bzw. des vorderen Stellgliedes (17) und Bereitstellen derselben für die elektronische Steuereinheit (40), die einen hinteren Wandler (18) und einen vorderen Wandler (19) enthält.

26. Gangschaltung nach Anspruch 25, **dadurch gekennzeichnet, dass** in der normalen Fahrbetriebsart die elektronische Steuereinheit (40) das hintere bzw. das vordere Stellglied (16, 17) ansteuert, um die Kette (13) zwischen dem ersten Zahnrad (11, 12) und dem zweiten Zahnrad (11, 12) zu versetzen, wobei dies rückkopplungsgesteuert durch die physikalische Position geschieht, die von der Einrichtung (18, 19) zum Erfassen der physikalischen Position erfasst wird.

27. Gangschaltung nach Anspruch 25 oder 26, **dadurch gekennzeichnet, dass** die Einrichtung (18, 19) zum Erfassen der physikalischen Position weiterhin eine Einrichtung zum Erfassen der Relativposition zwischen dem hinteren bzw. vorderen Stellglied (16, 17) und dem vorbestimmten Zahnrad (11, 12) und zum Erzeugen der Informationen über die erfolgreiche Ausrichtung enthält.

28. Gangschaltung nach Anspruch 27, **dadurch gekennzeichnet, dass** sich die Einrichtung zum Erfassen der Relativposition auch dazu eignet, ein erstes Versatzanfordersignal des Stellgliedes (16, 17) in der ersten Richtung oder ein zweites Versatzanfordersignal des Stellgliedes (16, 17) in der zweiten Richtung zu erzeugen.

29. Gangschaltung nach einem der Ansprüche 21 bis 28, enthaltend eine Einrichtung zum Speichern einer Differentialgröße (ΔRx, ΔFy), die jedem Paar benachbarter Zahnräder (11, 12) im voraus zugeordnet ist, wobei in der normalen Fahrbetriebsart der logische Wert, der dem zweiten Zahnrad (11, 12) zugeordnet ist, bestimmt wird, indem die Differentialgröße, die dem Paar im voraus zugeordnet ist, das durch das erste und zweite Zahnrad (11, 12) gebildet ist, zu dem logischen Wert, der dem ersten Zahnrad (11, 12) zugeordnet ist, addiert oder von diesem subtrahiert wird.

30. Gangschaltung nach Ansprich 29, **dadurch gekennzeichnet, dass** die Differentialgrößen (ΔF, ΔF), die jedem Paar benachbarter Zahnräder (11, 12) der Gangschaltunggruppe im voraus zugeordnet sind, gleich groß sind.

31. Gangschaltung nach einem der Ansprüche 22 bis 30, **dadurch gekennzeichnet, dass** die Motoren des hinteren und des vorderen Stellgliedes (16, 17) Schrittmotoren sind und ein Versetzen des hinteren oder vorderen Stellgliedes (16, 17) um einen Schritt oder ein ganzzahliges Vielfaches von Schritten einer einheitlichen Erhöhung oder Verminderung der hinteren oder vorderen Zähleinrichtung (47, 48) entspricht.

32. Gangschaltung nach einem der Ansprüche 21 bis 31, **dadurch gekennzeichnet, dass** sie eine Einrichtung (60) zum Ausgeben von Informationen enthält, die mit der manuellen Eingabeeinrichtung (43-46, 60-63) eine Benutzerschnittstelle mit der elektronischen Steuereinheit (40) bildet.

33. Gangschaltung nach einem der Ansprüche 21 bis 32, **dadurch gekennzeichnet, dass** sie eine Leistungsplatine (30) enthält, die zwischen der elektronischen Steuereinheit (40) und dem hinteren und vorderen Stellglied (16, 17) angeordnet ist.

34. Gangschaltung nach einem der Ansprüche 21 bis 33, **dadurch gekennzeichnet, dass** die elektronische Steuereinheit (40) wenigstens einen Mikrocontroller enthält, der gemäß der C-MOS-Technik hergestellt ist.

35. Gangschaltung nach einem der Ansprüche 21 bis 34, **dadurch gekennzeichnet, dass** die elektronische Steuereinheit (40) verteilt ist und zahlreiche Mikrocontroller an einer Anzeigeeinheit (60) und/oder an einer Einheit zum Steuern der manuellen Eingabeeinrichtung (43-47, 61-63) und/oder an einer Leistungsplatine (30) enthält.

## Revendications

1. Procédé destiné à asservir électroniquement un dispositif de changement de vitesse de bicyclette asservi électroniquement (8), comprenant les étapes consistant à :
a) entraîner (207, 211, 307, 311) un actionneur (16, 17) d'un dispositif de changement de vitesse de bicyclette (8) pour déplacer une chaîne (13) du dispositif de changement de vitesse dans une direction axiale (A, B) par rapport à un groupe de dispositif de changement de vitesse (9, 10) comprenant au moins deux roues dentées (11, 12), dans un premier sens ou dans un deuxième sens opposé au premier sens.
b) recevoir des informations sur l'alignement réussi (205, 305) entre la chaîne (13) et une roue dentée prédéterminée (11, 12) du groupe de dispositif de changement de vitesse (9, 10), et
c) établir (215, 315) une correspondance biunivoque entre la position physique de l'actionneur (16, 17) lors de l'étape b) et une valeur logique associée au rapport de vitesse par rapport à la roue dentée prédéterminée (11, 12) **caractérisé en ce que** lors de l'étape a) l'actionneur est entraîné pour déplacer la chaîne à une vitesse inférieure par rapport à un mode de fonctionnement de conduite normale.

2. Procédé selon la revendication 1, caractérisa en ce que la roue dentée prédéterminée (11, 12) est la roue dentée ayant le plus petit diamètre du groupe de dispositif de changement de vitesse (9, 10).

3. Procédé selon la revendication 1 ou 2, **caractérisé en ce que** l'étape c) consistant à établir (215, 315) une correspondance biunivoque comprend l'établissement de la valeur d'un compteur (47, 48) à une valeur logique pré-associée à la roue dentée prédéterminée (11, 12).

4. Procédé selon la revendication 3, lorsqu'elle dépend de la revendication 2, **caractérisé en ce que** ladite étape c) consistant à établir (215, 315) une correspondance biunivoque comprend le fait de mettre à zéro le compteur (47, 48).

5. Procédé selon l'une des revendications 1 ou 2, **caractérisé en ce que** ladite étape c) consistant à établir (215, 315) une correspondance biunivoque comprend la mémorisation dans un moyen de mémorisation (49, 50) de la valeur actuelle d'un compteur (47, 48) en tant que valeur logique (Fx, Ry) pré-associée à la roue dentée prédéterminée (11, 12).

6. Procédé selon la revendication 5, **caractérisé par** la répétition des étapes a) à c) pour chaque roue dentée (11, 12) et une valeur logique correspondante (Fx, Ry),

7. Procédé selon l'une des revendications précédentes, comprenant en outre les étapes consistant à :
d) fournir une interface d'utilisateur (43-46, 60-63),
e) recevoir par l'intermédiaire de l'interface d'utilisateur (43-46, 60-63) un premier signal de demande de déplacement (206, 208, 306, 308) de l'actionneur (16, 17) dans le premier sens ou un deuxième signal de demande de déplacement (210, 212, 310, 312) de l'actionneur (16, 17) dans le deuxième sens,
où lors de l'étape a) consistant à entraîner l'actionneur (16, 17), le déplacement de la chaîne (13) est effectué dans le premier sens ou le deuxième sens selon le signal de demande de déplacement (206, 208, 306, 308, 210, 212, 310, 312) reçu lors de l'étape e).

8. Procédé selon la revendication 7, **caractérisé en ce que** l'étape b) consistant à recevoir des informations sur l'alignement réussi (205, 305) est effectuée par l'intermédiaire de l'interface d'utilisateur (43-46, 60-63)

9. Procédé selon l'une des revendications 1 à 7, **caractérisé par** l'étape consistant à :
f) fournir des moyens destinés à détecter la position relative entre la chaîne (13) et la roue dentée prédéterminée (11, 12) et fournir les informations sur l'alignement réussi (205, 305).

10. Procédé selon la revendication 9, **caractérisé en ce que** les moyens destinés à détecter la position relative entre la chaîne (13) et la roue dentée prédéterminée (11, 12) sont en outre appropriés pour fournir un premier signal de demande de déplacement (206, 208, 306, 308) de l'actionneur (16, 17) dans le premier sens ou un deuxième signal de demande de déplacement (210, 212, 310, 312) de l'actionneur (16, 17) dans le deuxième sens,
où lors de l'étape a) consistant à entraîner l'actionneur (16, 17), le déplacement de la chaîne (13) est effectué dans le premier sens ou le deuxième sens selon le signal de demande de déplacement (206, 208, 306, 308, 210, 212, 310, 312).

11. Procédé selon l'une des revendications précédentes, **caractérisé en ce que** l'étape a) est effectuée avec la bicyclette immobile.

12. Procédé selon l'une des revendications précédentes, **caractérisé en ce que** l'étape a) est effectuée en maintenant la chaîne (13) du dispositif de changement de vitesse en mouvement.

13. Procédé selon l'une des revendications précédentes, comprenant les étapes consistant à :
g) recevoir un signal de mode de fonctionnement sélectionné à partir du groupe comprenant au moins un mode de fonctionnement de conduite normale (102) et un mode de fonctionnement de consigne (114),
h) recevoir un premier (43, 45) ou un deuxième (44, 46), respectivement, signal de demande de déplacement de l'actionneur (16, 17) pour déplacer la chaîne (13) du dispositif de changement de vitesse (8) dans la direction axiale (A, B) par rapport au groupe de dispositif de changement de vitesse (9, 10), dans le premier sens ou le deuxième sens, respectivement,
i1) lorsque le signal de mode de fonctionnement correspond au mode de fonctionnement de consigne (114), effectuer au moins les étapes a) à c),
i2) lorsque le signal de mode de fonctionnement correspond au mode de fonctionnement de conduite normale (102), effectuer l'étape consistant à entraîner l'actionneur (16, 17) du dispositif de changement de vitesse (8) pour déplacer la chaîne (13) du dispositif de changement de vitesse (8) dans la direction axiale (A, B) par rapport au groupe de dispositif de changement de vitesse (9, 10), dans le premier sens ou dans le deuxième sens, entre la position physique correspondant à une première roue dentée (11, 12) du groupe de dispositif de changement de vitesse (9, 10) et la position physique correspondant à une deuxième roue dentée (11, 12) du groupe de dispositif de changement de vitesse (9, 10), les positions physiques étant déterminées par les valeurs logiques associées aux roues dentées (11, 12).

14. Procédé selon la revendication 13, **caractérisé en ce que** l'étape i2) comprend l'entraînement de l'actionneur (16, 17) pour déplacer la chaîne (13) dans la direction axiale (A, B) par rapport au groupe de dispositif de changement de vitesse (9, 10), dans le premier sens ou dans le deuxième sens, respectivement, d'une valeur déterminé augmentant ou diminuant, respectivement, la valeur d'un compteur (47, 48) d'une valeur différentielle (ΔFx, ΔRy) pré-associée à la paire formée par la première roue dentée (11, 12) et la deuxième roue dentée (11, 12).

15. Procédé selon la revendication 14, **caractérisé en ce que** les valeurs différentielles (ΔFx, ΔRy) pré-associées à chaque paire de roues dentées adjacentes (11, 12) du groupe de dispositif de changement de vitesse (9, 10) sont égales l'une à l'autre (ΔF, ΔR).

16. Procédé selon l'une des revendications précédentes, **caractérisé en ce qu'**il comprend également les étapes, effectuées après l'étape b) consistant à recevoir des informations sur l'alignement réussi (215, 315), consistant à j) entraîner l'actionneur (16, 17) du dispositif de changement de vitesse (8) pour déplacer la chaîne (13) du dispositif de changement de vitesse dans la direction axiale (A, B) par rapport au groupe de dispositif de changement de vitesse (9, 10), dans le premier sens ou dans le deuxième sens, respectivement,_depuis la position actuelle de manière séquentielle jusqu'à chaque roue dentée adjacente (11, 12) du groupe de dispositif de changement de vitesse (9, 10),
k) entraîner l'actionneur (16, 17) pour déplacer la chaîne (13) dans la direction axiale (A, B) par rapport au groupe de dispositif de changement de vitesse (9, 19), dans le premier sens ou dans le deuxième sens,
1) recevoir des deuxièmes informations sur l'alignement réussi entre la chaîne (13) et une roue dentée prédéterminée (11, 12) du groupe de dispositif de changement de vitesse (9, 10).

17. Procédé selon la revendication 16, **caractérisé en ce qu'**il comprend l'étape, effectuée entre l'étape k) et l'étape 1), consistant à :
j1) entraîner l'actionneur (16, 17) du dispositif de changement de vitesse (8) pour déplacer la chaîne (13) du dispositif de changement de vitesse dans la direction axiale (A, B) par rapport au groupe de dispositif de changement de vitesse (9, 10), dans le deuxième sens ou dans le premier sens, respectivement, de manière séquentielle jusqu'à chaque roue dentée adjacente (11, 12) du groupe de dispositif de changement de vitesse (9, 10) jusqu'à atteindre la roue dentée prédéterminée (11, 12).

18. Procédé selon l'une des revendications précédentes, **caractérisé en ce que** lors de l'étape a) et/ou lors de l'étape k) lorsqu'elle est prévue, l'actionneur (16, 17) est entraîné pour déplacer la chaîne (13) à une vitesse relativement faible, et lors des étapes i2), j) et/ou j1) lorsqu'elles sont prévues, l'actionneur (16, 17) est entraîné pour déplacer la chaîne (13) à une vitesse relativement élevée.

19. Procédé selon l'une des revendications précédentes, **caractérisé en ce que** lors de l'étape a) et/ou lors de l'étape k) lorsqu'elle est prévue, un moteur électrique pas-à-pas de l'actionneur (16, 17) est entraîné pour déplacer la chaîne (13) par l'intermédiaire d'un mouvement d'un pas ou d'un nombre relativement faible de pas, et lors des étapes i2), j) et/ou jl) lorsqu'elles sont prévues, le moteur électrique de l'actionneur (16, 17) est entraîné pour déplacer la chaîne (13) par l'intermédiaire d'un mouvement d'un nombre relativement élevé de pas.

20. Programme destiné à asservir électroniquement un dispositif de changement de vitesse de bicyclette, comprenant un moyen de code de programme approprié pour effectuer les étapes du procédé selon l'une quelconque des revendications précédentes, lorsque le programme est exécuté sur un ordinateur, mis en oeuvre dans au moins un microcontrôleur.

21. Dispositif de changement de vitesse de bicyclette (8), comprenant:
- un actionneur arrière (16) et un actionneur avant (17), comportant un moteur électrique respectif, pour déplacer par l'intermédiaire d'un élément de guidage (14, 15) une chaîne (13) dans une direction axiale (A, B) par rapport à un groupe de dispositif de changement de vitesse respectif (9, 10) comprenant au moins deux roues dentées (11, 12) respectivement associées au moyeu de la roue arrière (4) et à l'axe des manivelles de pédalier (7) d'une bicyclette (1), dans un premier sens ou dans un deuxième sens opposé au premier sens,
- des moyens d'entrée manuelle (43-46, 60-63) comprenant un moyen (43-46) destiné à entrer un signal de demande de déplacement de l'actionneur arrière ou de l'actionneur avant (16, 17), respectivement, dans le premier ou le deuxième sens,
- une unité de commande électronique (40) connectée aux moyens d'entrée (43-46, 60-63), à l'actionneur arrière (16) et à l'actionneur avant (17), de manière fonctionnelle, dans un mode de fonctionnement de conduite normale (102), afin d'entraîner l'actionneur arrière ou avant (16, 17), respectivement, sur la base du signal de demande de déplacement pour déplacer la chaîne (13) d'une première roue dentée (11, 12) vers une deuxième roue dentée adjacente (11, 12) du groupe de dispositif de changement de vitesse respectif (9, 10)
- les moyens d'entrée manuelle (43-46, 60-63) comprenant un moyen (60-63) destiné à sélectionner le mode de fonctionnement entre ledit mode de fonctionnement de conduite normale et un mode de fonctionnement de consigne,
- l'unité de commande électronique (40), dans un mode de fonctionnement de conduite normale, entraînant l'actionneur arrière ou avant (16, 17), respectivement, entre une valeur logique associée à la première roue dentée (11, 12) et une valeur logique associée à la deuxième roue dentée (11, 12),
- l'unité de commande électronique (40) agissant, dans le mode de fonctionnement de consigne, pour entraîner l'actionneur arrière ou avant (16, 17), respectivement, sur la base du signal de demande de déplacement pour déplacer la chaîne (13) dans le premier ou le deuxième sens, l'unité de commande électronique (40) ayant également un moyen (43-46) destiné à appliquer en entrée des informations sur l'alignement réussi entre la chaîne (13) et une roue dentée prédéterminée (11, 12) du groupe de dispositif de changement de vitesse (9, 10), et un moyen (215, 315), en réponse au moyen (43-46) destiné à appliquer en entrée des informations sur l'alignement réussi, destiné à établir une correspondance biunivoque entre la position physique de l'actionneur arrière ou avant (16, 17), respectivement, et la valeur logique associée à la roue dentée prédéterminée (11, 12),
**caractérisé en ce que** l'unité de commande électronique (40) agit pour entraîner l'actionneur arrière ou avant (16, 17), respectivement pour déplacer la chaîne (13) à une vitesse inférieure dans le mode de fonctionnement de consigne par rapport à celle dans le mode de fonctionnement normal.

22. Dispositif de changement de vitesse (8) selon la revendication 21, **caractérisé en ce que**
- le moyen (215, 315) destiné à établir une correspondance biunivoque comprend un moyen (215, 315) destiné à établir la valeur d'un compteur arrière ou avant (47, 48) à la valeur logique pré-associée à la roue dentée prédéterminée (1 12).

23. Dispositif de changement de vitesse selon la revendication 22, **caractérisé en ce que** la roue dentée prédéterminée (11, 12) est la roue dentée (11, 12) ayant le plus petit diamètre et le moyen (215, 315) destiné à établir une correspondance biunivoque comprend un moyen destiné à mettre à zéro le compteur arrière ou avant (47, 48).

24. Dispositif de changement de vitesse selon la revendication 21, **caractérisé en ce que**
- le moyen destiné à établir une correspondance biunivoque comprend un moyen destiné à mémoriser dans un moyen de mémorisation (49, 50) la valeur actuelle d'un compteur arrière ou avant (47, 48) en tant que valeur logique pré-associée à la roue dentée prédéterminée (11, 12).

25. Dispositif de changement de vitesse selon l'une des revendications 21 à 24, comprenant des moyens (18, 19) destinés à détecter la position physique de l'actionneur arrière (16) et de l'actionneur avant (17), respectivement, et à fournir celle-ci à-l'unité de commande électronique (40), comprenant un transducteur arrière (18) et un transducteur avant (19).

26. Dispositif de changement de vitesse selon la revendication 25, **caractérisé en ce que**, dans un mode de fonctionnement de conduite normale, l'unité de commande électronique (40) entraîne l'actionneur arrière ou avant (16, 17), respectivement, pour déplacer la chaîne (13) entre la première roue dentée (11, 12) et la deuxième roue dentée (11, 12) commandée par rétroaction par la position physique détectée par les moyens destinés à détecter la position physique (18, 19).

27. Dispositif de changement de vitesse selon la revendication 25 ou 26, **caractérisé en ce que** les moyens destinés à détecter la position physique (18, 19) comprennent en outre un moyen destiné à détecter la position relative entre l'actionneur arrière ou avant (16, 17), respectivement, et la roue dentée prédéterminée (11, 12) et destiné à générer les informations sur l'alignement réussi.

28. Dispositif de changement de vitesse selon la revendication 27, **caractérisé en ce que** les moyens destinés à détecter la position relative sont également appropriés pour générer un premier signal de demande de déplacement de l'actionneur (16, 17) dans le premier sens ou un deuxième signal de demande de déplacement de l'actionneur (16, 17) dans le deuxième sens.

29. Dispositif de changement de vitesse selon l'une des revendications 21 à 28, comprenant un moyen destiné à mémoriser une valeur différentielle (ΔRx, ΔFy) pré-associée à chaque paire de roues dentées adjacentes (11, 12), où dans le mode de fonctionnement de conduite normale la valeur logique associée à la deuxième roue dentée (11, 12) est déterminée en ajoutant, ou respectivement en soustrayant, la valeur différentielle pré-associée à la paire formée par la première et la deuxième roues dentées (11, 12) à/de la valeur logique associée à la première roue dentée (11, 12).

30. Dispositif de changement de vitesse selon la revendication 29, **caractérisé en ce que** les valeurs différentielles (ΔR, ΔF) pré-associées à chaque paire de roues dentées adjacentes (11, 12) du groupe de dispositif de changement de vitesse (9, 10) sont égales l'une à l'autre.

31. Dispositif de changement de vitesse selon l'une des revendications 22 à 30, **caractérisé en ce que** les moteurs électriques des actionneurs arrière et avant (16, 17) sont des moteurs électriques pas-à-pas et un déplacement de l'actionneur arrière ou avant (16, 17) d'un seul pas ou d'un multiple entier de pas correspond à une augmentation ou à une diminution unitaire du compteur arrière ou avant (47, 48).

32. Dispositif de changement de vitesse selon l'une des revendications 21 à 31, **caractérisé par** l'inclusion d'un moyen (60) destiné à fournir en sortie des informations définissant, avec les moyens d'entrée manuelle (43-46, 60-63), une interface d'utilisateur avec l'unité de commande électronique (40).

33. Dispositif de changement de vitesse selon l'une des revendications 21 à 32, **caractérisé en ce qu'**il comprend une carte d'alimentation (30) agencée entre l'unité de commande électronique (40) et les actionneurs arrière et avant (16, 17).

34. Dispositif de changement de vitesse selon l'une des revendications 21 à 33, **caractérisé en ce que** l'unité de commande électronique (40) comprend au moins un microcontrôleur constitué suivant une technologie C-MOS.

35. Dispositif de changement de vitesse selon l'une des revendications 21 à 34, **caractérisé en ce que** l'unité de commande électronique (40) est répartie et comprend de nombreux microcontrôleurs au niveau d'une unité d'affichage (60) et/ou au niveau d'une unité destinée à commander les moyens d'entrée manuelle (43-46, 60-63) et/ou au niveau d'une carte d'alimentation (30).
